# EUROPÄISCHE PATENTSCHRIFT

(11) **EP 3 009 666 B1**
(45) Veröffentlichungstag und Bekanntmachung des Hinweises auf die Patenterteilung: **17.04.2024**
(21) Anmeldenummer: 15002190.5
(22) Anmeldetag: 24.07.2015
(51) Int. Cl.: F02N 11/04, H02K 11/215, F16F 15/30, G01P 3/488, H02K 29/08, G01D 5/14, G01D 5/245, H02K 7/00, F02N 11/00

(54) **KURBELWELLENSTARTERGENERATOR**
CRANKSHAFT STARTER GENERATOR
ALTERNO-DÉMARREUR DE VILEBREQUIN

(30) Priorität: 16.10.2014 DE 102014015262
(43) Veröffentlichungstag der Anmeldung: 20.04.2016
(73) Patentinhaber: MAN Truck & Bus SE, 80995 München (DE)
(72) Erfinder: Golka, Markus, 90402 Nürnberg (DE)
(74) Vertreter: v. Bezold & Partner Patentanwälte - PartG mbB

(56) Entgegenhaltungen:
- EP-A2- 1 251 337
- EP-A2- 1 344 711
- EP-A2- 1 355 062
- WO-A2-2011/076178
- DE-A1- 10 120 414
- DE-A1- 10 152 748
- DE-A1-102004 001 570
- FR-A1- 2 925 787
- US-A- 5 796 195
- US-B1- 7 239 032

## Beschreibung

Die Erfindung betrifft einen Kurbelwellenstartergenerator nach dem Oberbegriff des Anspruchs 1.

Aus der Praxis sind Antriebsstrangmodule bekannt, bei denen eine motorisch als auch generatorisch betreibbare elektrische Maschine in Form eines elektrischen Kurbelwellenstartergenerators (KSG) zwischen Motor und Getriebe koaxial zur Kurbelwelle vorgesehen ist. Hierbei steht der Kurbelwellenstartergenerator in Wirkverbindung mit der Kurbelwelle, in dem der KSG-Rotor mit einem auf der Kurbelwelle angeordneten Schwungrad drehfest verbunden ist.

Für den Betrieb des Kurbelwellenstartergenerators wird seitens der Fahrzeugelektronik bzw. der Fahrzeugsteuerung die Verdrehstellung des Rotors relativ zum Stator benötigt. Aus der Praxis ist bekannt, die Erfassung der Verdrehstellung von Rotor zu Stator z. B. mittels eines zusätzlichen becherförmigen oder topfförmigen Bauteils zu realisieren, das drehfest am Schwungrad befestigt ist, auf dem ebenfalls drehfest der Rotor angeordnet ist. Auf dem Bauteil ist eine spezielle Geometrie (Geberspur) angebracht, die mittels eines Sensors (Lagegeber) abgegriffen wird, um die Position des Rotors zu bestimmen. Weiterhin wird diese Geberspur üblicherweise ausschließlich für eine Anwendung angepasst. Dementsprechend sind aufwändige Fertigungsverfahren notwendig, beispielsweise Fräsverfahren. Dadurch erhöhen sich die Herstellungskosten. Nachteilig ist ferner der hohe zusätzliche Bauraumbedarf eines solchen becherförmigen oder topfförmigen Bauteils.

Aus dem Stand der Technik ist ferner bekannt, dass eine insbesondere für Steuergeräte in Brennkraftmaschinen wichtige Drehzahl- und Winkelinformation bezüglich der Stellung der Kurbelwelle mit einem einzigen, rad- bzw. scheibenförmigen Geber für beide Parameter erfasst werden kann. Gängige Ausführungen sind Anordnungen zur Bestimmung bzw. Auswertung der Winkelgeschwindigkeit, bei denen an einem Starterzahnkranz des Schwungrades gemessen wird und zusätzlich eine Bezugsmarke, z. B. korrespondierend zu dem oberen Totpunkt (OT), in Form einer Lücke in der Verzahnung vorgesehen ist. Eine solche Modifizierung der Zahnstruktur des Anlasserzahnkranzes ist jedoch nicht unproblematisch, da der Einspurweg des Einspurritzels eines Anlassers sich mehr oder weniger weit über die axiale Länge der Zähne eines Anlasserzahnkranzes erstreckt, wobei der Anlassvorgang durch die Bezugsmarke nicht behindert werden darf. Ferner ist es fertigungstechnisch aufwändig, einen modifizierten Anlasserzahnkranz so mit dem Schwungrad zu verbinden, dass die Bezugsmarke relativ zu einer definierten Kurbelwellenlage richtig positioniert ist.

Die Offenlegungsschrift DE 101 52 748 A1 offenbart einen Kurbelwellen-Starter-Generator, bei dem am Rotor an einer geeigneten Fläche eine Verzahnung in Form nur eines einzigen Zahnkranzes vorgesehen ist, wobei vier unterschiedliche Anbauorte für den Zahnkranz vorgeschlagen werden. Auch in der Offenlegungsschrift EP 1 355 062 A2 ist ein Startergenerator vorgeschlagen, der lediglich einen Starterkranz 18 aufweist. Aus der US 7,239,032 B1 ist bekannt, dass bei einer Startergeneratoranordnung die Rotorlage gemessen werden soll. Aus der US 5,796,195 ist ein elektrischer Motor bekannt, der einen Lagegeber zur Bestimmung der Rotorposition aufweist, basierend auf einem Polfeldabschnitt des Rotors.

Es ist somit eine Aufgabe der Erfindung, eine verbesserte Möglichkeit zur Erfassung der Verdrehstellung von Rotor zu Stator eines Kurbelwellenstartergenerators bereitzustellen, mit der Nachteile herkömmlicher Techniken vermieden werden können.

Diese Aufgaben werden durch einen Kurbelwellenstartergenerator (KSG) mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der erfindungsgemäße Kurbelwellenstartergenerator umfasst einen Stator, einen Rotor und einen Rotorträger, auf dem der Rotor drehfest angeordnet ist. Der Kurbelwellenstartergenerator umfasst ferner einen mit dem Rotorträger drehfest verbundenen Anlasserzahnkranz, der auf einer zylindrischen Mantelfläche des Rotorträgers angeordnet ist. Der Anlasserzahnkranz kann in an sich bekannter Weise in Eingriff mit einem Anlasserritzel einer Startereinrichtung gebracht und von dieser in Rotation versetzt werden. Hierbei kann der Rotorträger auch als Teil des Schwungrads ausgebildet sein. Beispielsweise kann an das Schwungrad, insbesondere an einen äußeren Umfangsbereich des Schwungsrads, eine sich in axialer Richtung erstreckende zylindrische Mantelfläche angeformt sein, die als Rotorträger dient.

Gemäß allgemeinen Gesichtspunkten der Erfindung umfasst der Kurbelwellenstartergenerator ferner einen mit dem Rotorträger drehfest verbundenen zweiten Zahnkranz, der ebenfalls auf der zylindrischen Mantelfläche des Rotorträgers angeordnet ist. Das zweite Zahnrad kann als Geberrad für die Erfassung der Verdrehstellung von Rotor zum Stator verwendet werden. Dadurch ist das Anbringen einer Bezugsmarke am Anlasserzahnkranz, die das sichere Einspuren des Anlasserritzels behindern könnte, nicht unbedingt notwendig. Ferner erfordert das Anbringen eines zweiten Zahnkranzes zusätzlich zum Anlasserzahnkranz auf dem Rotorträger nur eine vergleichsweise geringe Anpassung des Herstellungsverfahrens, da dieser in vergleichbarer Weise wie der erste Zahnkranz auf den Rotorträger aufgebracht werden kann. Der zweite Zahnkranz kann mindestens eine Bezugsmarke zur Erfassung einer definierten Verdrehstellung des Rotors relativ zum Stator aufweisen.

Zur Erzielung einer baulich möglichst kompakten Bauweise ist es vorteilhaft, den Anlasserzahnkranz schwungradseitig anzuordnen und den zweiten Zahnkranz axial beabstandet zwischen dem Rotor und dem Anlasserzahnkranz anzuordnen. Dadurch kann das Anlasserritzel und der sich anschließende Startermotor am Randbereich des Rotorträgers angeordnet werden.

Erfindungsgemäß weist der zweite Zahnkranz eine im Vergleich zum Anlasserzahnkranz unterschiedliche Zahnstruktur auf. Beispielsweise kann der zweite Zahnkranz eine im Vergleich zum Anlasserzahnkranz unterschiedliche Anzahl von Zähnen, eine unterschiedliche Länge der Zähne und/oder eine unterschiedliche Länge der Zahnzwischenräume aufweisen. Dies bietet den Vorteil, dass sich eine relative Positionierung eines Zahns des zweiten Zahnkranzes zu dem benachbarten Zahn des Anlasserzahnkranzes in Umfangsrichtung verändert, z. B. verschiebt. Dies kann zur Bestimmung der Verdrehstellung genutzt werden.

Erfindungsgemäß umfasst der Kurbelwellenstartergenerator ein induktiv oder kapazitiv arbeitendes Aufnahmeelement, das ausgeführt ist, durch Abtasten eine durch eine rotierende erste Zahnstruktur gebildete erste Geberspur des Anlasserzahnkranzes und eine durch eine rotierende zweite Zahnstruktur gebildete zweite Geberspur des zweiten Zahnkranzes zu erfassen, wobei aus der erfassten ersten Geberspur und der erfassten zweiten Geberspur durch das Aufnahmeelement oder durch eine Steuereinheit eine definierte Verdrehstellung des Rotors relativ zum Stator bestimmt wird. Eine vorteilhafte Variante sieht hierbei vor, dass das Aufnahmeelement oder die Steuereinheit ausgeführt ist, die Verdrehstellung des Rotors relativ zum Stator aus einem Superpositionssignal zu ermitteln, das aus dem abgetasteten Signal der ersten Geberspur und dem abgetasteten Signal der zweiten Geberspur gebildet wird. Beispielsweise kann ein Differenzsignal aus dem abgetasteten Signal der ersten Geberspur und dem abgetasteten Signal der zweiten Geberspur gebildet werden.

Das Aufnahmeelement kann in ein Gehäuse des Kurbelwellenstartergenerators oder in ein Gehäuse des Schwungrades integriert sein. Ferner ist es vorteilhaft, wenn der zweite Zahnkranz so ausgeführt ist, dass die erste und zweite Geberspur auf einer radialen Höhe liegen.

Die Erfindung betrifft ferner ein Kraftfahrzeug, insbesondere ein Nutzfahrzeug, mit einem Kurbelwellenstartergenerator wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Querschnittsansicht einer oberen Hälfte eines Kurbelwellenstartergenerators gemäß einer Ausführungsform der Erfindung; und
- Figur 2: eine perspektivische Ansicht im Teilschnitt eines Kurbelwellenstartergenerators gemäß einer Ausführungsform der Erfindung.

Gleiche oder funktional äquivalente Elemente sind in allen Figuren mit denselben Bezugszeichen bezeichnet.

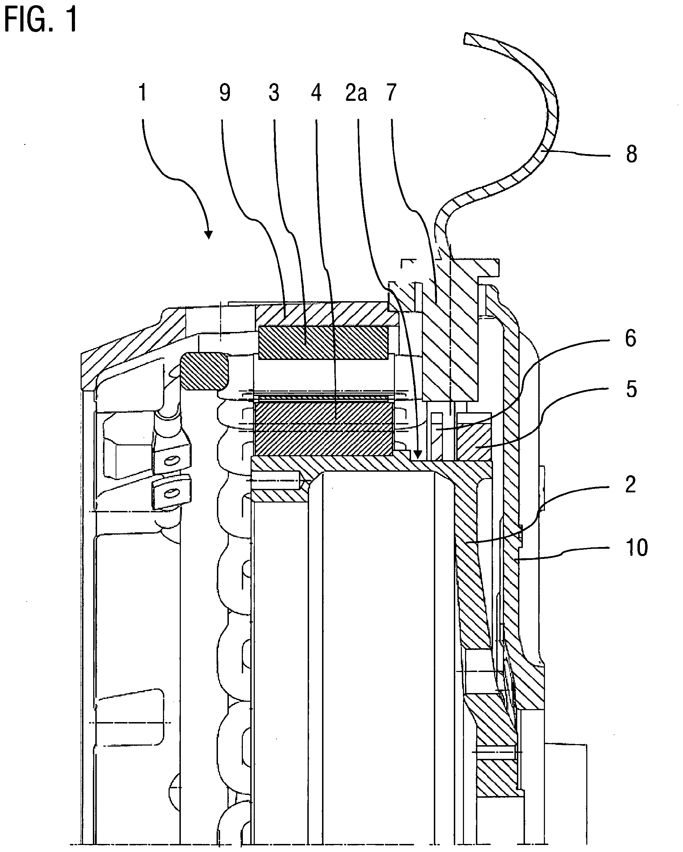

In Figur 1 ist eine Querschnittsansicht einer oberen Hälfte eines Kurbelwellenstartergenerators gemäß einer Ausführungsform der Erfindung dargestellt. Der Kurbelwellenstartergenerator 1 ist zwischen einem Getriebe und einem Verbrennungsmotor (hier nicht dargestellt) im Antriebsstrang eines Kraftfahrzeugs platziert. Der Kurbelwellenstartergenerator umfasst ein KSG-Gehäuse 9, das teilbar ausgeführt sein kann. Am Innenumfang des KSG-Gehäuses 9 ist der Stator 3 befestigt. Der Stator ist aus ineinandergreifenden und miteinander verschweißten Elektroblechen gebildet sowie den darin aufgenommenen Wicklungen des Stators. Der Kurbelwellenstartergenerator 1 umfasst ferner einen Rotor 4, der drehfest auf einer zylindrischen Mantelfläche 2a eines Rotorträgers 2 angeordnet ist. Der Rotorträger ist Teil des Schwungrades 2. Die sich in axialer Richtung erstreckende zylindrische Mantelfläche 2a ist an einen äußeren Umfangsbereich des Schwungsrads 2 angeformt. Der Rotor 4 ist somit mit dem Schwungrad 2 bewegungsgekoppelt. Das Schwungrad 2 wird von einem Schwungradgehäuse 10 umhaust, das am KSG-Gehäuse 9 befestigt ist.

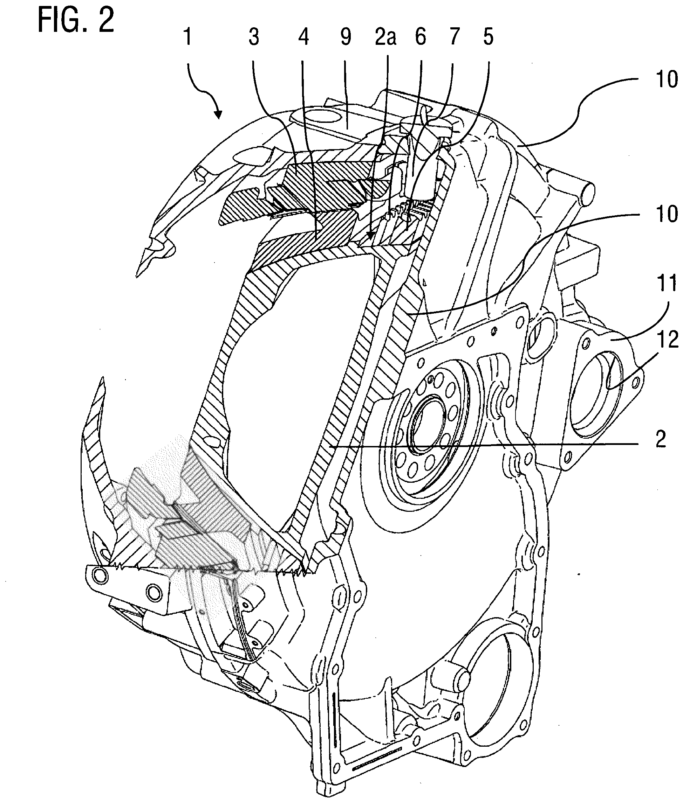

Der Kurbelwellenstartergenerator umfasst einen mit dem Rotorträger drehfest verbundenen Anlasserzahnkranz 5, der auf der zylindrischen Mantelfläche 2a des Rotorträgers angeordnet ist. Der Anlasserzahnkranz kann in an sich bekannter Weise in Eingriff mit einem Anlasserritzel eines Startermotors (nicht gezeigt) gebracht und von diesem in Rotation versetzt werden. In der Darstellung der Figur 2 ist eine Gehäuseabschnitt 11 zur Aufnahme eines nicht dargestellten Startermotors gezeigt, der in der Öffnung 12 eingeführt und gehaltert wird.

Ferner ist ein mit dem Rotorträger drehfest verbundener zweiter Zahnkranz 6 vorgesehen, der auf der zylindrischen Mantelfläche 2a des Rotorträgers 2 befestigt ist. Der zweite Zahnkranz ist zum Anlasserzahnkranz 5 axial versetzt angeordnet. Da der zweite Zahnkranz 6 nur zur Erfassung der Verdrehstellung von Rotor zum Stator verwendet wird und nicht in Eingriff mit dem Anlasserritzel gebracht wird bzw. kein antreibendes Moment eines Startermotors übertragen muss, kann der zweite Zahnkranz 6 schmaler als der Anlasserzahnkranz 5 ausgeführt werden. Die beiden Zahnkränze 5 und 6 werden auf die zylindrische Mantelfläche 2a aufgeschrumpft oder aufgepresst.

Der zweite Zahnkranz 6 weist eine im Vergleich zum Anlasserzahnkranz 5 unterschiedliche Zahnstruktur auf und kann beispielsweise eine unterschiedliche Anzahl von Zähnen haben.

Der Kurbelwellenstartergenerator umfasst ferner ein induktiv oder kapazitiv arbeitendes Aufnahmeelement 7, das in Radialrichtung über dem Anlasserzahnkranz 5 und dem zweiten Zahnkranz 6 stationär angeordnet ist. Bei rotierendem Schwungrad 2 bilden die Zähne des Anlasserzahnkranzes 5 eine erste Geberspur für das Aufnahmeelement 7 und die Zähne des zweiten Zahnkranzes 6 eine zweite Geberspur für das Aufnahmeelement 7. Das Aufnahmeelement 7 ist ausgeführt, durch induktives oder kapazitives Abtasten die durch die rotierende erste Zahnstruktur gebildete erste Geberspur und die durch die rotierende zweite Zahnstruktur gebildete zweite Geberspur zu erfassen, aus denen nachfolgend eine definierte Verdrehstellung des Rotors relativ zum Stator bestimmt werden kann. Die Messergebnisse des Aufnahmeelements 7 werden über eine Signalleitung 8 an eine Steuereinheit übermittelt. In der Steuereinheit oder bereits in dem Aufnahmeelement 7 werden die Signale von der ersten Geberspur und von der zweiten Geberspur überlagert. Aus dem überlagerten Signal kann dann die Verdrehstellung des Rotor zum Stator ermittelt werden. Die beiden Signale der beiden Geberspuren weisen Amplituden, entsprechend der jeweiligen Zahnstruktur bzw. Zahngeometrie, auf. Dabei ist der Abstand der Amplituden aufgrund der unterschiedlichen Zahnstruktur zueinander an jeder Stelle unterschiedlich, wodurch die Position erkannt wird.

### Bezugszeichenliste

- 1: Kurbelwellenstartergenerator
- 2: Schwungrad
- 2a: Mantelfläche
- 3: Stator
- 4: Rotor
- 5: Anlasserzahnkranz
- 6: Zweiter Zahnkranz
- 7: Aufnahmeelement
- 8: Signalleitung
- 9: KSG-Gehäuse
- 10: Schwungradgehäuse
- 11: Gehäuseabschnitt zur Aufnahme des Startermotors
- 12: Öffnung

## Patentansprüche

1. Kurbelwellenstartergenerator, umfassend
einen Stator (3);
einen Rotor (4);
einen Rotorträger (2); und
einen mit dem Rotorträger drehfest verbundenen Anlasserzahnkranz (5), der auf einer zylindrischen Mantelfläche (2a) des Rotorträgers (2) angeordnet ist, derart, dass der Anlasserzahnkranz in Eingriff mit einem Anlasserritzel eines zweiten Startermotors bringbar ist,
wobei ein mit dem Rotorträger drehfest verbundener zweiter Zahnkranz (6) auf der zylindrischen Mantelfläche (2a) des Rotorträgers (2) angeordnet ist, **dadurch gekennzeichnet,**
**dass** der zweite Zahnkranz (6) eine im Vergleich zum Anlasserzahnkranz (5) unterschiedliche Zahnstruktur aufweist; und
**dass** ein induktiv oder kapazitiv arbeitendes Aufnahmeelement (7) vorgesehen ist, das ausgeführt ist, durch Abtasten eine durch eine rotierende erste Zahnstruktur gebildete erste Geberspur des Anlasserzahnkranzes (5) und eine durch eine rotierende zweite Zahnstruktur gebildete zweite Geberspur des zweiten Zahnkranzes (6) zu erfassen,
wobei aus der erfassten ersten Geberspur und der erfassten zweiten Geberspur durch das Aufnahmeelement (7) oder durch eine Steuereinheit, an die Messergebnisse des Aufnahmeelements (7) übermittelt werden, eine definierte Verdrehstellung des Rotors relativ zum Stator bestimmt wird.

2. Kurbelwellenstartergenerator nach Anspruch 1, **dadurch gekennzeichnet,**
**dass** der Anlasserzahnkranz (5) schwungradseitig angeordnet ist und der zweite Zahnkranz (6) zwischen dem Rotor (4) und dem Anlasserzahnkranz (5) angeordnet ist.

3. Kurbelwellenstartergenerator nach Anspruch 1 oder 2, **dadurch gekennzeichnet, dass** der zweite Zahnkranz (6) eine im Vergleich zum Anlasserzahnkranz (5) unterschiedliche Anzahl von Zähnen, unterschiedliche Länge der Zähne und/oder unterschiedliche Länge der Zahnzwischenräume aufweist.

4. Kurbelwellenstartergenerator nach einem der vorhergehenden Ansprüche, **dadurch gekennzeichnet, dass** die Verdrehstellung des Rotors (4) relativ zum Stator (3) aus einem Superpositionssignal ermittelt wird, das aus dem abgetasteten Signal der ersten Geberspur und dem abgetasteten Signal der zweiten Geberspur gebildet wird.

5. Kurbelwellenstartergenerator nach einem der vorhergehenden Ansprüche, **dadurch gekennzeichnet, dass** die erste und zweite Geberspur auf einer Höhe liegen.

6. Kurbelwellenstartergenerator nach einem der vorhergehenden Ansprüche, **dadurch gekennzeichnet, dass** der Rotorträger (2) als Teil des Schwungrades ausgebildet ist.

7. Kurbelwellenstartergenerator nach Anspruch 6, **dadurch gekennzeichnet, dass** das Aufnahmeelement (7) in ein Gehäuse des Kurbelwellenstartergenerators oder in ein Gehäuse (10) des Schwungrades integriert ist.

8. Kraftfahrzeug, insbesondere Nutzfahrzeug, mit einem Kurbelwellenstartergenerator nach einem der vorhergehenden Ansprüche.

## Claims

1. A crankshaft starter generator comprising
a stator (3);
a rotor (4);
a rotor carrier (2); and
a starter ring gear (5) which is non-rotatably connected to the rotor carrier and is arranged on a cylindrical lateral surface (2a) of the rotor carrier (2) in such a way that the starter ring gear can be brought into engagement with a starter pinion of a second starter motor,
wherein a second ring gear (6), which is non-rotatably connected to the rotor carrier, is arranged on the cylindrical lateral surface (2a) of the rotor carrier (2),
**characterised in that**
**in that** the second ring gear (6) has a different tooth structure compared to the starter ring gear (5); and
**in that** an inductively or capacitively operating pick-up element (7) is provided, which is configured to detect, by scanning, a first encoder track of the starter ring gear (5) formed by a rotating first tooth structure and a second encoder track of the second ring gear (6) formed by a rotating second tooth structure,
wherein a defined rotational position of the rotor relative to the stator is determined from the first encoder track and the detected second encoder track detected by the receiving element (7) or by a control unit to which measurement results of the receiving element (7) are transmitted.

2. Crankshaft starter generator according to claim 1, **characterised in that**
the starter ring gear (5) is arranged on the flywheel side and the second ring gear (6) is arranged between the rotor (4) and the starter ring gear (5).

3. Crankshaft starter generator according to claim 1 or 2, **characterised in that**
the second ring gear (6) has a different number of teeth, different lengths of the teeth and/or different lengths of the spaces between the teeth compared to the starter ring gear (5).

4. Crankshaft starter generator according to one of the preceding claims, **characterised in that** the rotational position of the rotor (4) relative to the stator (3) is determined from a superposition signal which is formed from the sampled signal of the first encoder track and the sampled signal of the second encoder track.

5. Crankshaft starter generator according to one of the preceding claims, **characterised in that** the first and second encoder tracks are at the same level.

6. Crankshaft starter generator according to one of the preceding claims, **characterised in that** the rotor carrier (2) is designed as part of the flywheel.

7. Crankshaft starter generator according to claim 6, **characterised in that** the mounting element (7) is integrated into a housing of the crankshaft starter generator or into a housing (10) of the flywheel.

8. Motor vehicle, in particular commercial vehicle, with a crankshaft starter generator according to one of the preceding claims.

## Revendications

1. Alterno-démarreur de vilebrequin, comprenant
un stator (3) ;
un rotor (4) ;
un support de rotor (2) ; et
une couronne dentée de démarreur (5) solidaire en rotation avec le support de rotor et qui est disposée sur une surface latérale cylindrique (2a) du support de rotor (2) de telle sorte que la couronne dentée de démarreur peut être mise en prise avec un pignon de démarreur d'un deuxième moteur de démarrage,
dans lequel une deuxième couronne dentée (6) solidaire en rotation avec le support de rotor est disposée sur la surface latérale cylindrique (2a) du support de rotor (2),
**caractérisé**
**en ce que** la deuxième couronne dentée (6) présente une structure de dent différente en comparaison avec la couronne dentée de démarreur (5) ; et
**en ce qu'**un élément d'enregistrement (7) à fonctionnement inductif ou capacitif est prévu qui est réalisé pour détecter par balayage une première voie d'encodeur de la couronne dentée de démarreur (5), formée par une première structure de dent rotative, et une deuxième voie d'encodeur de la deuxième couronne dentée (6), formée par une deuxième structure de dent rotative,
dans lequel, à partir de la première voie d'encodeur détectée et de la deuxième voie d'encodeur détectée, l'élément d'enregistrement (7) ou une unité de commande, auquel/à laquelle les résultats de mesure de l'élément d'enregistrement (7) sont transmis, détermine une position de rotation définie du rotor par rapport au stator.

2. Alterno-démarreur de vilebrequin selon la revendication 1, **caractérisé en ce que** la couronne dentée de démarreur (5) est disposée côté volant, et la deuxième couronne dentée (6) est disposée entre le rotor (4) et la couronne dentée de démarreur (5).

3. Alterno-démarreur de vilebrequin selon la revendication 1 ou 2, **caractérisé en ce que** la deuxième couronne dentée (6) présente en comparaison avec la couronne dentée de démarreur (5) un nombre différent de dents, une longueur différente des dents et/ou une longueur différente des entredents.

4. Alterno-démarreur de vilebrequin selon l'une quelconque des revendications précédentes, **caractérisé en ce que** la position de rotation du rotor (4) par rapport au stator (3) est déterminée à partir d'un signal de superposition qui est formé à partir du signal balayé de la première voie d'encodeur et du signal balayé de la deuxième voie d'encodeur.

5. Alterno-démarreur de vilebrequin selon l'une quelconque des revendications précédentes, **caractérisé en ce que** la première et la deuxième voie d'encodeur sont situées au même niveau.

6. Alterno-démarreur de vilebrequin selon l'une quelconque des revendications précédentes, **caractérisé en ce que** le support de rotor (2) est réalisé comme une partie du volant.

7. Alterno-démarreur de vilebrequin selon la revendication 6, **caractérisé en ce que** l'élément d'enregistrement (7) est intégré dans un carter de l'alterno-démarreur de vilebrequin ou dans un carter (10) du volant.

8. Véhicule automobile, en particulier véhicule utilitaire, comprenant un alterno-démarreur de vilebrequin selon l'une quelconque des revendications précédentes.
